# EUROPEAN PATENT SPECIFICATION

(11) **EP 1 564 828 B1**
(45) Date of publication and mention of the grant of the patent: **22.08.2012**
(21) Application number: 05002663.2
(22) Date of filing: 09.02.2005
(51) Int. Cl.: H01M 2/10, H05K 5/02

(54) **Portable electronic equipment**
Tragbare elektronische Geräte
Equipement électronique portable

(30) Priority: 13.02.2004 JP 2004036127
(43) Date of publication of application: 17.08.2005
(73) Proprietor: HONDA LOCK MFG. Co., LTD., Miyazaki-gun, Miyazaki (JP)
(72) Inventor: Hidaka, Osamu Honda Lock Mfg. Co. Ltd., Miyazaki-gun Miyazaki (JP)
(74) Representative: Stachow, Ernst-Walther

(56) References cited:
- JP-A- 3 149 746
- JP-A- 7 022 012
- JP-A- 56 096 275
- US-A- 4 068 464
- US-A- 5 436 088

## Description

### Field of the Invention

The present invention concerns a portable electronic equipment which is suitably used, for example, in a transmitter for a key less entry system of automobiles.

### Background Art

Portable transmitters for the remote operation of locking and undocking of automobile door keys, etc have already been put to practical use (for example, refer to Japanese Patent Laid-Open No. 2001-339176).

Generally, in portable electronic equipments of this type, a printed substrate and a button-shaped mercury cell are contained in a case made of a synthetic resin and divided into two parts. When the cell is mounted to a cell holder provided in the case, electrodes of the cell are in contact with power supply terminals which are soldered to the printed substrate. Then, those in which the power supply terminals are integrated with the cell holder made of a synthetic resin are provided as standard products. According to them, since the relative position between the power supply terminals and the cell holder are determined exactly, it can provide an advantage that the cell holder is fixed in position by merely soldering the power supply terminals to the printed substrate.

However, in this existent constitution, while the state of contact between the electrodes of the cell and the power supply terminals are stabilized, the joining strength of the cell holder to the printed substrate exclusively depends on the soldering strength of the power supply terminals. Accordingly, upon dropping the case, for example, the inertia exerting on the cell directly exerts on the soldered portion and the soldered portion may possibly be broken by the impact.

JP 07 022012 A discloses a device of this kind having an inner case which holds two cells in a way so that the terminals cannot cause a short-circuit.

### SUMMARY OF THE INVENTION

For solving the problem described above and providing a portable electronic equipment of high impact resistance, the present invention provides a portable electronic equipment in which a printed substrate, a cell holder soldered to the printed substrate, a cell mounted to the cell holder are contained in a case (upper and lower cases), wherein a backup member made of a synthetic resin having an opposed portion that opposes to the inner surface of a circumferential wall of the case and an abutting portion (resilient contact portion) that abuts against at least one of the cell holder or the cell is interposed between the cell holder and the cell, and the inner surface of the circumferential wall of the case.

Further, according to a preferred embodiment of the invention, at least a portion of the abutting portion is formed as a resilient contact portion.

Further, according to another preferred embodiment, in addition to the constitution described above, a seal member in a bottomed box-like configuration made of a resilient material is mounted to a case (lower case) so as to cover one surface of the printed substrate, and a circumferential wall of the seal member is put between the opposed portion disposed to the backup member and the inner surface of the circumferential wall of the case.

According to the constitution of the invention described above, since the cell or the cell holder is supported by the abutting portion of the backup member, the stress caused by the impact upon dropping and exerting on the soldered portion can be decreased to provide a great effect for enhancing the impact resistance.

Further, according to the preferred embodiment, since the resilient contact portion receives the impact resiliently, this is effective for improving the shock absorption.

Further, according to another preferred embodiment, since the circumferential wall of the seal member is urged to the inner surface of the circumferential wall of the case by the opposed portion of the backup member, turn-down of the circumferential wall of the seal member is prevented, which is effective for ensuring a sufficient sealability.

### DESCRIPTION OF THE ACCOMPANYING DRAWINGS

Preferred embodiments of the present invention will be described in details based on the drawings, wherein
Fig. 1 is an exploded perspective of the equipment according to the prevent invention.
Fig. 2 is a plan view observed with a upper case of the equipment according to the invention being removed

### PREFERRED EMBODIMENT OF THE INVENTION

The present invention is to be described specifically with reference to the appended drawings.

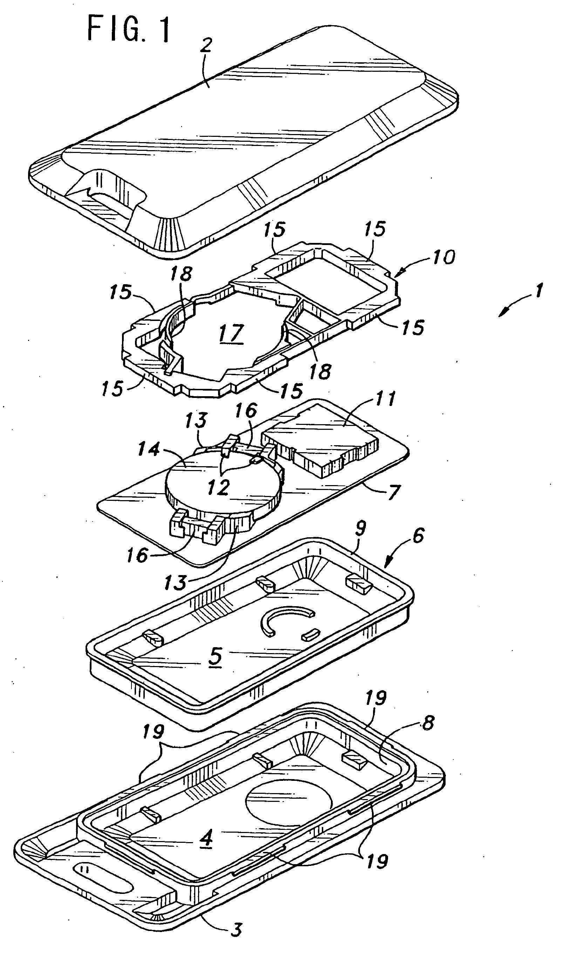

Fig. 1 shows an entire constitution of a portable transmitter for remote operation of locking and unlocking door keys of automobiles, etc. The portable transmitter 1 comprises an upper case 2 formed of a synthetic resin material into a bottomed box-like shape which is opened at the lower surface, a lower case 3 formed of a rigid synthetic resin material into a bottomed box-like shape which is opened at the upper surface, a seal member 6 formed of a soft synthetic resin material into a bottomed box-like shape which is opened at the upper surface and substantially in close contact at the bottom wall 5 thereof with the inner surface of the bottom wall 4 of the lower case 3 and, a printed substrate contained within both of the upper case 2 and the lower case 3 such that the lower surface and the outer circumferential edge thereof are covered with the seal member 6, and a backup member 10 disposed so as to put the circumferential wall 9 of the seal member 6 between it and the inner surface of the circumferential wall 8 of the lower case 3. The directionality regarding "upper" and "lower" is defined herein for the convenience of explanation and it is not restricted to the direction described above in practical use.

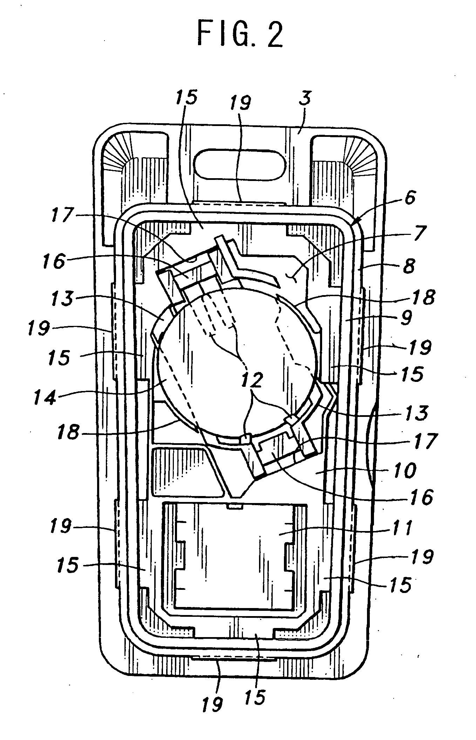

As also shown in Fig 2 together, power supply terminals 12 are soldered on the upper surface of the printed substrate 7 mounted with a chip 11 such as a transmission circuit, and a cell holder 13 joined integrally with the power supply terminals 12 is fixed by the soldering of the power supply terminals 12. A button-like mercury cell 14 is attached to the cell holder 13.

The backup member 10 is formed of a highly resilient synthetic resin material into a frame-like shape appropriately spaced from the circumferential wall 8 of the lower case 3 in which a plurality of opposed portions 15 (six portions in this embodiment) that oppose to required portions on the inner surface of the circumferential wall 8 of the lower case 3 are formed in abutment against the inner surface of the circumferential wall 9 of the seal member 6 substantially in close contact with the lower case 3 so as to outwardly protrude sideway. Further, a portion 17 that surrounds the outer profile of a joining portion 16 of the cell holder 13 with the power supply terminals 12 and resilient contact portions 18 that resiliently abut against a portion of the outer circumferential surface of the cell 14 are formed at the inside thereof.

In the portable transmitter 1 constituted as described above, both of the upper case 2 and the lower case 3 are joined integrally by engaging ridges 19 foamed at required portions of the lower case 3 and groves (not illustrated) formed corresponding to the ridges 19 in the upper case 2 to each other by the resiliency of the materials per se that constitute both the cases 2 and 3, in which the upper edge of the circumferential wall 9 of the seal member 6 is in close contact with the lower surface at the outer circumference of the upper case 2 to obtain a desired water tightness.

In a case where the portable transmitter 1 should happen to be dropped, since the gravitational position is localized on the side of cell 14, it collides against a floor with the side containing the cell being downward. Accordingly, a large impact exerts on the upper wall of the cell folder 13 in Fig 2. Such impact may exert a large stress on the soldered portion of the power supply terminals 12 relative to the printed substrata 7 joined integrally with the cell holder 13 to possibly cause fracture of the cell holder 13 or peeling of the soldered portion.

In view of the above, in the invention, the resilient contact portion 18 that abuts resiliently at the point-to-point symmetrical positions on the outer circumference of the cell 14 and a portion 17 that surrounds the power supply terminal joining portion 16 of the cell holder 13 are disposed to the backup member 10. Then since the cell 14 and the cell holder 13 are resiliently supported by the backup member 10, the dropping impact can be absorbed to decrease the stress exerting on the soldered portion of the cell holder 13 and the power supply terminals 12 joined integrally with the cell holder.

Further, since the required portions of the circumferential wall 9 of the seal member 6 are urged to the inner surface of the circumferential wall 8 of the lower case 3 by the opposed portions 15 formed to the backup member 10, this can prevent turn-down of the circumferential 2 of the seal member 6 and avoid impairment of close contact of the open side edge of the seal member 6 with the inner surface of the upper case 2, so that a sufficiently high sealability can be ensured.

Since it may suffice that the backup member 10 for supporting the cell 14 or the cell holder 13 can receive the inertia of the cell 14 upon dropping accident and suppress propagation of the impact from the cell holder 13 to the power supply terminals 12, it may be also formed of a rigid material. Further, the portion supported by the backup member 10 may of course be either one or both of the cell 14 and the cell holder 13.

As has been described above, in accordance with the invention, since the inertia of the cell 14 upon exertion of the impact is received to moderate the stress exerting locally on the soldered portion of the power supply terminals 12 or the cell holder 13 to prevent breakage, it is applicable generally to portable electronic equipments incorporating the button-shaped cell of this type.

## Claims

1. A portable electronic equipment in which a printed substrate (7), a cell holder (13) and a cell (14) mounted to the cell holder (13) are contained in a case (3), **characterized in that**
the cell holder (13) is joined integrally with power supply terminals (12) and fixed to the printed substrate (7) by soldering of the power supply terminals (12) to the printed substrate (7) and
a backup member (10) made of a synthetic resin having an opposed portion (15) that opposes to the inner surface of a circumferential wall (9) of the case (3) and an abutting portion (18) that abuts against at least one of the cell holder (13) or the cell (14), is intervened between the cell holder and the cell, and the inner surface of the circumferential wall (8) of the case (3), and that
the abutting portion of the backup member is formed as a resilient contact portion that extends from the surface of the backup member that opposes to the cell and resiliently abuts against a portion of the outer circumferential surface of the cell.

2. A portable electronic equipment according to claim 1, wherein
a circumferential wall of a seal member (6) is put between the inner surface of the circumferential wall of the case and the opposed portion of the backup member.

## Patentansprüche

1. Tragbares elektronisches Gerät, bei der eine gedruckte Platine (7), ein Zellenhalter (13) und eine im Zellenhalter angebrachte Zelle (14) in einem Gehäuse (3) eingeschlossen sind, **dadurch gekennzeichnet, dass**
- der Zellenhalter (13) einstückig mit Stromzuführungen (12) verbunden und auf der gedruckten Platine (7) befestigt ist, indem die Stromzuführungen (12) an die gedruckte Platine. (7) gelötet sind,
- ein Stützelement (10) aus Kunstharz mit einem Gegenabschnitt (15), welcher der Innenfläche einer peripheren Wand (9) des Gehäuses (3) gegenüberliegt und einem Stoßabschnitt (18), der an den Zellenhalter (13) und/oder die Zelle (14) anstößt, zwischen Zellenhalter und Zelle und Innenfläche der peripheren Wand (8) des Gehäuses (3) eingefügt ist und dass
- der Stoßabschnitt des Stützelements als nachgebender Kontaktabschnitt ausgebildet ist, der von der der Zelle gegenüberliegenden Oberfläche des Stützelements ausgeht und nachgebend an einen Abschnitt der peripheren Außenfläche der Zelle anstößt.

2. Tragbares elektronisches Gerät nach Anspruch 1, worin zwischen die Innenfläche der peripheren Wand des Gehäuses und den Gegenabschnitt des Stützelements eine periphere Wand eines Dichtelements (6) eingesetzt ist.

## Revendications

1. Équipement électronique portable dans lequel un substrat imprimé (7),
un porte-cellule (13) et une cellule montée au porte-cellule (13) sont accommodées dans une boîte (3), **caractérisé en ce que** le porte-cellule (13) est relié à des connecteurs d'alimentation en courant (12) de manière intégrée par soudage des connecteurs d'alimentation en courant (12) au substrat imprimé (7) et
qu'un élément d'appui (10) en résine synthétique comportant une partie opposée (15) s'opposant à la surface intérieure d'une paroi circonférentielle (9) de la boîte (3) et une partie de butée (18) butant contre au moins l'un(e) de porte-cellule (13) ou cellule (14) est interposé entre le porte-cellule et la cellule et la surface de la paroi circonférentielle (8) de la boîte (3) et
que la partie de butée de l'élément d'appui est formée comme une partie de contact élastique s'étendant de la surface de l'élément d'appui vis à vis la cellule et butant élastiquement contre une partie de la surface circonférentielle extérieure de la cellule.

2. Équipement électronique portable selon la revendication 1, dans lequel une paroi circonférentielle d'un élément d'étanchéité (6) est placée entre la surface intérieure de la paroi circonférentielle de la boîte et la partie opposée de l'élément d'appui.
